# EUROPÄISCHE PATENTSCHRIFT

(11) **EP 0 923 464 B1**
(45) Veröffentlichungstag und Bekanntmachung des Hinweises auf die Patenterteilung: **15.03.2000**
(21) Anmeldenummer: 97919005.5
(22) Anmeldetag: 27.08.1997
(51) Int. Cl.: B60R 16/02

(54) **DATENBUS FÜR FAHRZEUGE MIT MEHREREN DER INSASSEN-SICHERHEIT DIENENDEN EINRICHTUNGEN**
DATA BUS FOR VEHICLES WITH SEVERAL PASSENGER SAFETY DEVICES
BUS DE DONNEES POUR VEHICULES COMPORTANT PLUSIEURS SYSTEMES SERVANT A LA SECURITE DES OCCUPANTS

(30) Priorität: 07.09.1996 DE 19636442
(43) Veröffentlichungstag der Anmeldung: 23.06.1999
(73) Patentinhaber: Bayerische Motoren Werke Aktiengesellschaft, 80788 München (DE)
(72) Erfinder: GRIESSBACH, Robert, D-83629 Weyarn (DE)
(86) Internationale Anmeldenummer: EP9704671
(87) Internationale Veröffentlichungsnummer: WO9809844

(56) Entgegenhaltungen:
- EP-A- 0 216 372
- WO-A-88/05390
- WO-A-89/09146

## Beschreibung

Die Erfindung bezieht sich auf einen Datenbus für Fahrzeuge mit mehreren der Insassen-Sicherheit dienenden Einrichtungen, die Teilnehmer des Datenbusses bilden.

Bei diesen Einrichtungen handelt es sich um Aktuatoren wie Airbags und Gurtstraffer oder aber auch um Sensoren, die Informationen über Zustände bzw. Meßwerte liefern. Ein derartiger Datenbus unterscheidet sich in seiner Bedeutung und Funktionalität wesentlich von Datenbussen, wie sie bei Fahrzeugen an sich üblich und bekannt sind. Bekannte Datenbusse dienen dazu, den Datenaustausch aller Teilnehmer untereinander zu ermöglichen. Die Teilnehmer sind Teilsystemen des Fahrzeugs zugeordnet und unter den Stichworten digitale Motorelektronik, elektronisch hydraulische Getriebesteuerung und Anti-Blockiersystem bekannt. Derartige Teilsysteme arbeiten nur dann zufriedenstellend, wenn der Datenaustausch sämtlicher Teilnehmer untereinander ermöglicht ist.

Bei einem Datenbus für sicherheitsrelevante Einrichtungen steht neben der Frage der Signallaufzeiten und der dadurch bedingten Zeitspannen zwischen dem Erkennen einer sicherheitskritischen Situation und der Reaktion darauf (beispielsweise durch Aktivieren eines Airbags) das Problem im Vordergrund, zumindest den im sicherheitskritischen Fall wichtigen Teilnehmern einen schnellen Zugriff auf den Datenbus zu ermöglichen. Zudem muß dieser Zugriff bei Einsatz des Datenbusses für sicherheitskritische Teile kollisionsfrei sein. Hierzu bekannte kontrollierte Zugriffsverfahren erfordern eine übergeordnete Steuerung für den Zugriff der Teilnehmer auf den Datenbus. Jeder Teilnehmer besitzt ein Zeitfenster, das entsprechend seiner Hierarchie zeitlich vor bzw. hinter den Teilnehmern liegt, die hierarchiemäßig nach- bzw. vorgeordnet sind. Jeder Teilnehmer muß solange warten, bis die Zeitfenster der hierarchiemäßig vorausgehenden Teilnehmer abgelaufen sind unabhängig davon, ob diese Teilnehmer auch tatsächlich senden. Bei sicherheitskritischen Einrichtungen bedeutet dies einen möglicherweise nicht zu vertretenen Zeitverlust. Einerseits muß der Zugriff sämtlicher Teilnehmer auf den Datenbus gewährleistet sein, andererseits muß jeder Teilnehmer solange warten, bis die Zeitfenster der vorausgehenden Teilnehmer abgelaufen sind. ***Ein derartiger Datenbus geht aus der WO 89/09146 A hervor.***

Alternative zufällige Zugriffsverfahren sind bei der genannten Anwendung ebenfalls problematisch, da mehrere Teilnehmer gleichzeitig, d. h. innerhalb der Signallaufzeit, senden können und es daher zu einer Kollision kommen kann. Um Kollisionen zu vermeiden ist es zwar bekannt, besondere Einrichtungen zur Erkennung einer möglichen Kollision vorzusehen. Die hierfür verwendeten Detektoren erhöhen den Aufwand und erfordern im Kollisionsfall auch die Vorgabe von Wiederversuchszeitintervallen, was ebenfalls Zeitverzögerungen und damit die Gefahr mit sich bringt, im Bedarfsfall nicht hinreichend schnell eine Sicherheitseinrichtung wie beispielsweise einen Airbag auslösen zu können.

Der Erfindung liegt die Aufgabe zugrunde, ein Verfahren der eingangs genannten Art zu schaffen, das den kollisionsfreien und schnellen Zugriff mehrerer Teilnehmer auf einen Datenbus ermöglicht, die sicherheitskritischen Einrichtungen zugeordnet sind.

Die Erfindung löst diese Aufgabe durch die kennzeichnenden Merkmale des Patentanspruchs 1.

Jeder Teilnehmer besitzt nun einen definierten Zeitpunkt für den Beginn seiner Sendeberechtigung. Dieser hängt einerseits von seiner hierarchischen Stellung und andererseits davon ab, ob ein oder mehrere hierarchiemäßig vorausgehende Teilnehmer senden. Senden alle vorausgehenden Teilnehmer nicht, so erhält er seine Sendeberechtigung zum frühestmöglichen Zeitpunkt. Senden hingegen prioritätshöhere Teilnehmer, so verschiebt sich der Zeitpunkt seiner Sendeberechtigung entsprechend der Zahl und Länge der von diesen Teilnehmern ausgegebenen Telegrammen.

Der Sendebetrieb der Teilnehmer kann mit Hilfe eines Taktimpulses gesteuert sein, der als Initialisierungsimpuls dient. Durch die Einstellung der Taktfrequenz, d. h. der Häufigkeit, mit der dieser Impuls ausgesandt wird, läßt sich die Zeit festlegen, die bei Auftreten einer sicherheitskritischen Situation bis zum Zugriff des entsprechenden Teilnehmers auf den Datenbus maximal vergeht. Um im Bedarfsfall möglichst schnell sicherheitskritische Einrichtungen auslösen zu können, kann es vorteilhaft sein, die Taktzeit, dann oder gegenüber der für die Aussendung von Telegrammen aller Teilnehmer erforderlichen Maximalzeit zu verkürzen. Es ist dann gegebenenfalls nicht mehr allen Teilnehmern möglich, auf den Datenbus zuzugreifen. Vielmehr erfolgt vorteilhafterweise eine Beschränkung der Zahl der Teilnehmer auf diejenigen, die bei einem sicherheitskritischen Zustand unbedingt den Zugriff auf den Datenbus besitzen müssen, während die anderen Teilnehmer dann gegebenenfalls nicht mehr auf den Datenbus zugreifen können.

Gleichzeitig oder ergänzend kann über die Verkürzung der Taktzeit in der beschriebenen Weise auch das Problem auftreten, daß ein Teilnehmer bei Ablauf der Taktzeit noch sendet. In diesem Fall kann es vorteilhaft sein, die Taktzeit entsprechend zu verlängern und den folgenden Sendevorgang des Initialisierungsimpulses mit dem vorletzten Initialisierungsimpuls zu synchronisieren.

Mit Hilfe des Initialisierungsimpulses ist es auch möglich, einen sicherheitskritischen Zustand (Alarmfall) von einem sicherheitsunkritischen Normalzustand (Normalfall) zu unterscheiden. Hierzu kann es vorteilhaft sein, die Länge des Initialisierungsimpulses für beide Zustände unterschiedlich vorzugeben. Die Teilnehmer werden dann über den Initialisierungsimpuls quasi in den Alarmzustand versetzt.

Das erfindungsgemäße Verfahren kann mit besonderem Vorteil bei einem Datenbus auf der Basis eines Lichtwellenleiters angewandt werden. Derartige Datenbusse erfordern den Sendebetrieb der Teilnehmer mit hoher Leistung, um die bei Lichtwellenleitern auftretenden hohen Verlustleistungen zu kompensieren und auch bei Teilnehmern, die sich an entfernten Stellen des Datenbusses befinden, den störungsfreien Empfang der ausgesandten Telegramme zu ermöglichen.

Die Erfindung ist anhand eines in der Zeichnung dargestellten Bussystem für mehrere Teilnehmer erläutert, die sicherheitskritischen Einrichtungen zugeordnet sind. Es zeigt
- Fig. 1: das Bussystem in seinem prizipiellen Aufbau
- Fig. 2: einen Ausschnitt des Bussystems von Fig. 1
- Fig. 3: ein Diagramm zur Erläuterung der Wirkungsweise des Bussystems.

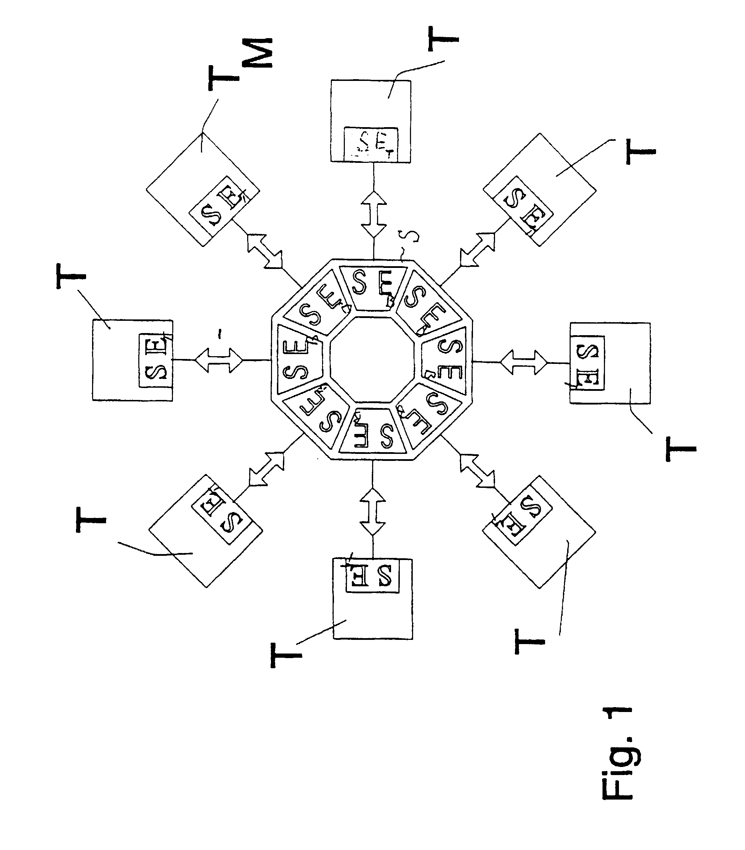

Das in Fig. 1 gezeigte Bussystem enthält mehrere Teilnehmer T, die über einen Lichtwellenleiter 1 und einen aktiven Sternkoppler S miteinander verbunden sind. Für jeden Teilnehmer T ist zur Anschaltung an das Bussystem ein Sende-Empfangsbaustein S-E_{T} vorhanden, in den eine Sende-Empfangsdiode (nicht dargestellt) sowie eine Strahlteileroptik integriert ist. Die S-E_{T}-Bausteine sind über entsprechende S-E_{B} Bausteine mit der Lichtwellenleiter verbunden. Die S-E_{B}-Bausteine bilden einen aktiven Sternkoppler. Sie sind im Sternkoppler so verschaltet, daß die von einem Teilnehmer ausgesandte Botschaft auf alle anderen Stränge des Bussystems verteilt wird. Außerdem wird durch einen Teilnehmer T_{M} die Funktion des Busmasters wahrgenommen.

Die auf dem Bus vom jeweils sendenden Teilnehmer ausgehenden und an die anderen Teilnehmer übertragenen Telegramme charakterisieren Zustände bzw. Meßwerte von Sensoren als einem Teil der Teilnehmer. Ferner befinden sich als weitere Teilnehmer Aktuatoren wie Airbags und Gurtstraffer am Bussystem angeschlossen. Die Aktuatoren erfassen die von den Sensoren gelieferten Telegramme und berechnen, jeder für sich, die notwendigen Aktionen. Gleichzeitig wird durch den Busmaster ein gegebenenfalls kritischer Zustand in einem Teilnehmer erkannt und durch Ausgabe eines Initialisierungsimpulses auf den Bus beantwortet, der sich in seiner Länge von dem ansonsten vom Busmaster ausgegebenen Initialisierungsimpuls unterscheidet.

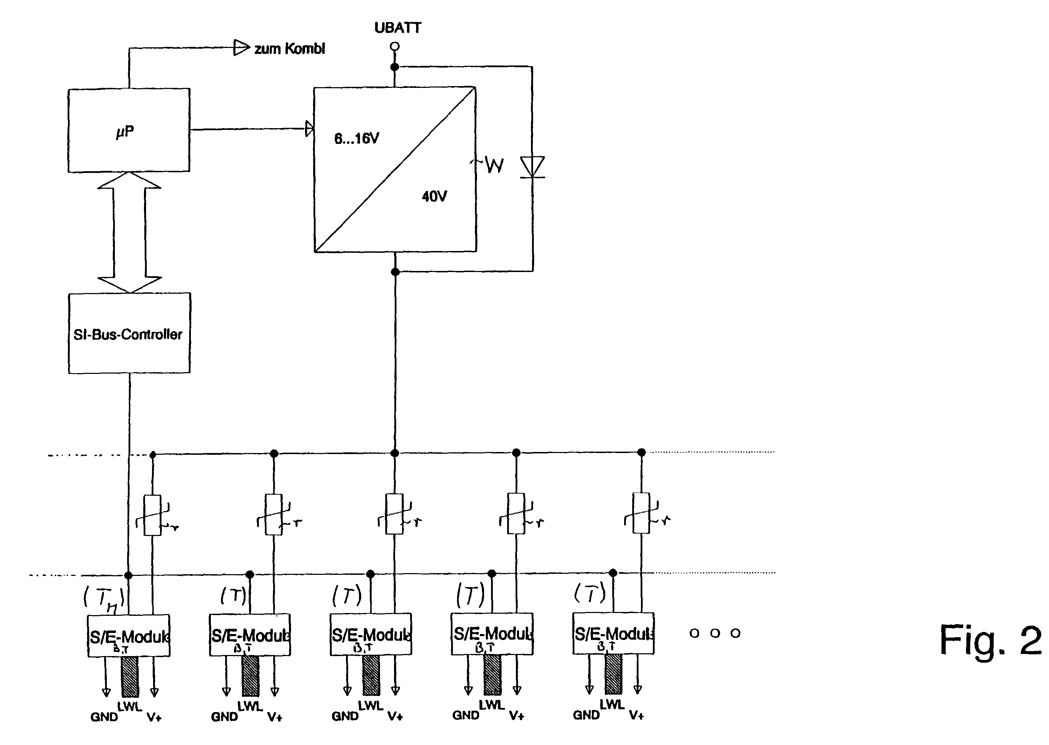

Der grundsätzliche Aufbau des aktiven Sternkopplers S ist anhand von Fig. 2 erläutert, in der ein Ausschnitt des Sternkopplers dargestellt ist. Im Sternkoppler ist, wie bereits ausgeführt, die Funktion des Busmasters integriert. Der Busmaster T_{M} sendet zyklisch Synchronisationsimpulse. Der zeitliche Abstand dieser Impulse ist so gewählt, daß die bei einem kritischen Zustand notwendigerweise sendenden Teilnehmer sämtlich und vollständig während eines Synchronisationszykluses auf den Bus zugreifen können, während andere Teilnehmer, beispielsweise auch die Aktuatoren, als Sender nur dann auf den Bus zugreifen können, wenn kein sicherheitskritischer Zustand vorliegt.

Der Busmaster T_{M} hört stets den Datenbus ab und erkennt das Vorliegen eines sicherheitskritischen Zustands. Er sendet dann selbsttätig einen Synchronisationsimpuls aus, der sich in seiner Länge von dem sonstigen Synchronisationspuls unterscheidet. Dadurch erhalten die Teilnehmer des Bussystems eine zusätzliche Information über einen kritischen Zustand, den sie bei ordnungsgemäßem Betrieb ansonsten auch selbst aufgrund eines auf dem Datenbus vorliegenden Telegramms erkennen.

Bei Ausfall der Masterfunktion kann, wie an sich bekannt, ein zu definierender anderer Busteilnehmer die Masterfunktion sowie die Bestimmung des Alarmzustands übernehmen.

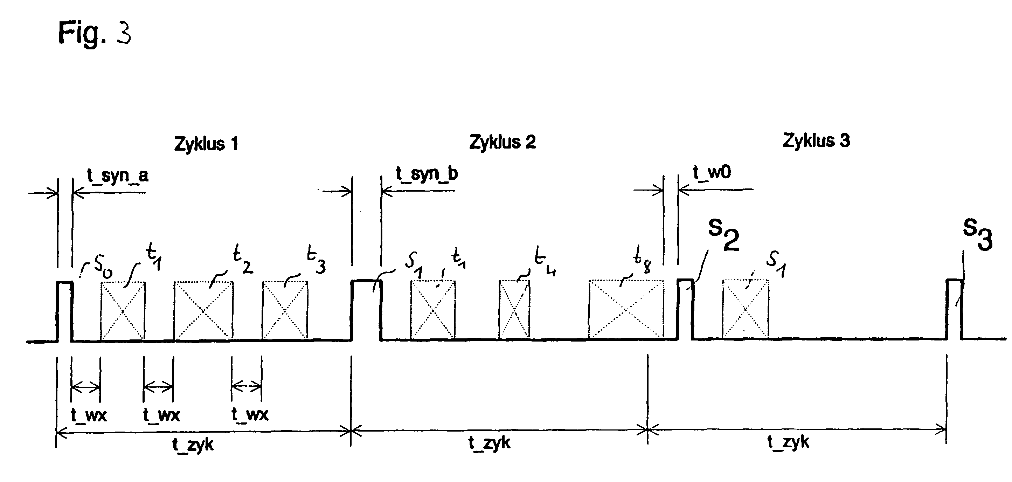

Der Datenverkehr auf dem Datenbus ist anhand von Figur 3 näher erläutert. Der Busmaster T_{M} sendet in zeitlich regelmäßigen Abständen einen Synchronisationsimpuls s_{y} aus. Im Bild sind insgesamt vier Impulse s₀, s₁, s₂ und s₃ dargestellt. Mit vorgegebender Sendepriorität erhalten die Teilnehmer die Sendeberechtigung. Befindet sich der jeweilige Teilnehmer in einem sicherheitsunkritischen Zustand, so sendet er in der Regel nicht. In der Regel bedeutet dabei, daß es sich dabei nicht um den Initialisierungsvorgang handelt, bei dem die Teilnehmer nach Inbetriebnahme des Fahrzeugs und oder in regelmäßigen Abständen sich durch Aussenden einer Kennung den anderen Teilnehmern und dem Busmaster zu erkennen geben. Diese Abstände sind ein Vielfaches des Synchronisationszyklus.

Handelt es sich um einen sicherheitsunkritischen Zustand, d. h. senden die Teilnehmer sämtlich nicht, so wird der nächste Synchronisationspuls nach Ablauf der Taktzeit t_{zyk} durch den Busmaster ausgegeben.

Bei einem sicherheitskritischen Zustand, bei dem beispielsweise der Busteilnehmer mit höchster Sendepriorität aktiviert ist, wird der Datenbus zunächst durch dessen Telegramm t₁ belegt. Dieses Telegramm wird zu einem Zeitpunkt t_{wx} nach dem Synchronisationspuls (hier t₀ ) ausgesandt, der sich aus den physikalischen Bedingungen eines Lichtwellenleiter-Datenbus ergibt. Der Teilnehmer mit der nächstfolgenden Sendepriorität sendet beispielsweise dann ebenfalls und gibt das Telegramm t₂ aus. Entsprechendes geschieht für den Teilnehmer mit dem Telegramm t₃.

Jedes Telegramm tᵢ besitzt, wie an sich aus der DE 34 35 216 A bekannt, eine Kennung, aufgrund derer die anderen Teilnehmer das Telegramm identifizieren und ggf. aufnehmen können. Es ist auch möglich, Telegramme auf den Datenbus auszugeben, die die Adresse eines Empfängers enthalten und nur für diesen bestimmt sind. Nach Ablauf der Taktzeit und wenn zu diesem Zeitpunkt kein Teilnehmer sendet, wird der nächste Synchronisationspuls s_{y} ausgegeben (hier zur Zeit t₁).

Sendet hingegen ein Teilnehmer (hier der Teilnehmer T₈) bei Ablauf der Taktzeit, so wird die Ausgabe des Synchronisationspulses verzögert. Dieser Fall ist in dem mit Zyklus 2 bezeichneten Zeitraum dargestellt. Die Verzögerung t_{w0} muß dabei kleiner als der zeitliche Abstand t_{wx} sein, der zwischen den Sendungen aufeinanderfolgender Teilnehmer besteht, um die Ausgabe des Synchronisationspulses vor dem nächsten Datentelegramm zu ermöglichen.

Der anschließende Synchronisationspuls s₃ ist mit dem ersten, zu Beginn des Zyklus 1 ausgegebenen Synchronisationspulses s₀ synchronisiert. Der zeitliche Abstand zwischen dem Synchronisationspuls s₂ und und s₃ ist kleiner als die Taktzeit.

Im Bild sind weitere Eigenschaften des Datenbus dargestellt. Im Zyklus 2 sind als aktive Sender die Teilnehmer T₁, T₄ und T₈ angenommen. Der Sendezeitpunkt bemißt sich nach dem Ende der Sendung des hierarchiemäßig vorausgehenden Teilnehmers und der eigenen hierarchischen Stellung. Bei aufeinanderfolgenden hierarchischen Stellungen zweier Sender ist der zeitliche Abstand minimal und gleich t_{wx}. Der zeitliche Abstand zweier Sender nimmt mit ihrem hierarchischen Abstand zu. Deshalb ist der Abstand zwischen t₁ und t₄ größer als der Abstand zwischen t₁ und t₂ und kleiner als der Abstand zwischen t₄ und t₈. Auf diese Weise erhält jeder Teilnehmer die Möglichkeit, im Bedarfsfall zu senden, sofern seine Sendeberechigung innerhalb der Zykluszeit vorliegt. Andrerseits sendet er nur dann, wenn tatsächlich ein Notfall vorliegt. Trotzdem ist der Sendezeitpunkt genau festgelegt. Kollisionen werden dadurch vermieden. Der Sendezeitpunkt jedes Teilnehmers ist der frühestmöglliche.

Im Alarmfall wird die Dauer des Synchronisationspulses verlängert. Dadurch wird, wie bereits ausgeführt, ein Schutz gegen eine Fehlauslösung einer Sicherheitseinrichtung erreicht.

Auf diese Weise wird erstmalig die Möglichkeit eröffnet, für den Schutz der Fahrzeugbenutzer zuständige Einrichtungen über einen Datenbus kommunizieren zu lassen. Ferner besteht bei diesem Datenbus die Möglichkeit, ihn außerhalb des Alarmfalls durch Teilnehmer zu belegen, die nicht-sicherheitskritischen Einrichtungen zugeordnet sind. Diese Einrichtungen können beispielsweise in einer Fahrzeugtür angeordet sein und zur Bewegung des Fensters, des Außenspiegels oder zur Türschloßheizung verwendet sein. Voraussetzung dafür ist lediglich eine Priorität, die kleiner ist als die der sicherheitskritischen Einrichtungen, um deren Betrieb im Alarmfall nicht zu stören.

## Patentansprüche

1. Datenbus für Fahrzeuge mit mehreren der Insassen-Sicherheit dienenden Einrichtungen, die Teilnehmer des Datenbusses bilden, wobei
a) jeder Teilnehmer eine hierarchieabhängige Sendeberechtigung besitzt,
b) der Teilnehmer nur im Alarmfall sendet,
c) die Sendeberechtigung nur zu einem Zeitpunkt gilt, der sich in seinem Abstand von einem Initialisierungszeitpunkt entsprechend der Hierarchie und der Sendedauer der in der Hierarchie vorausgehenden Teilnehmer bemißt, dadurch gekennzeichnet, daß
d) der zeitliche Abstand zwischen zwei aufeinanderfolgenden Initialisierungszeitpunkten so gewählt ist, daß die bei einem kritischen Zustand notwendigerweise sendenden Teilnehmer sämtlich und vollständig auf den Bus zugreifen können, während andere Teilnehmer als Sender nur dann auf den Bus zugreifen können, wenn kein sicherheitskritischer Zustand vorliegt.

2. Datenbus nach Anspruch 1,
dadurch gekennzeichnet,
daß die Teilnehmer im Normalfall ein Zustandssignal abgeben.

3. Datenbus nach Anspruch 1 oder 2,
dadurch gekennzeichnet,
daß der Initialisierungszeitpunkt durch einen zyklisch ausgesandten Initialisierungsimpuls bestimmt ist.

4. Datenbus nach Anspruch 3,
dadurch gekennzeichnet,
daß der nächste Initialisierungsimpuls verzögert ausgegeben wird, wenn bei Ablauf der Taktzeit ein Teilnehmer sendet.

5. Datenbus nach Anspruch 4,
dadurch gekennzeichnet,
daß der übernächste Initialisierungsimpuls synchron mit dem ersten Initialisierungsimpuls ist.

6. Datenbus nach einem der Ansprüche 3 bis 5,
dadurch gekennzeichnet,
daß der Initialisierungsimpuls bei einem Alarmzustand eine vom Normalzustand unterschiedliche Länge besitzt.

7. Datenbus nach einem der Ansprüche 1 bis 6,
dadurch gekennzeichnet,
daß im Normalfall Teilnehmer den Datenbus belegen, die nicht-sicherheitskritischen Einrichtungen des Fahrzeugs zugeordnet sind.

## Claims

1. A data bus for vehicles with several devices serving the safety of the occupants, which form communication terminals of the data base, whereby
a) each communication terminal possesses a hierarchical transmitting authorisation,
b) the communication terminal transmits in the event of an alarm only,
c) the transmitting authorisation applies only to a time position, which is measured in its separation from an initialising time point, in dependence on the hierarchy and the duration of the transmission of the preceding communication terminals in the hierarchy,
characterised in that
d) the time interval between two sequential initialising time points is selected such that communication terminals necessarily transmitting in a critical situation can all access the bus completely, whilst other communication terminals can then only access the bus as transmitters, when no safety-critical situation is present.

2. A data bus according to Claim 1,
characterised in that,
the communication terminals issue a status signal in normal conditions.

3. A data bus according to Claim 1 or Claim 2,
characterised in that,
the initialising time point is determined by a cyclicly broadcast initialising pulse.

4. A data bus according to Claim 3,
characterised in that,
the next initialising pulse is delayed in its transmission, if a communication terminal is transmitting at the end of the timing period.

5. A data bus according to Claim 4,
characterised in that,
the next but one initialising pulse is synchronous with the first initialising pulse.

6. A data bus according to one of the Claims 3 to 5
characterised in that,
the initialising pulse in an alarm situation has a different length from that in normal circumstances.

7. A data bus according to one of the Claims 1 to 6
characterised in that
in a normal situation communication terminals, which are assigned to non-safety critical devices occupy the data bus.

## Revendications

1. Bus de données pour véhicules avec plusieurs systèmes servant à assurer la sécurité des occupants, qui forment des parties prenantes du bus de données,
dans lequel
a) chaque partie prenante possède une autorisation d'émettre en fonction de son rang hiérarchique,
b) la partie prenante n'émet qu'en cas d'alarme,
c) l'autorisation d'émettre ne vaut qu'à un instant qui se mesure quant à sa distance par rapport à un instant d'initialisation en fonction du rang hiérarchique et de la durée de l'émission des parties prenantes précédentes dans la hiérarchie,
caractérisé en ce que
d) l'intervalle de temps entre deux instants d'initialisation consécutifs est choisi de telle façon que les parties prenantes en train d'émettre de façon nécessaire dans le cas d'un état critique peuvent accéder toutes et complètement au bus de données, tandis que d'autres parties prenantes ne peuvent alors accéder au bus de données en tant qu'émetteur que quand il n'y a pas de situation critique du point de vue de la sécurité.

2. Bus de données selon la revendication 1,
caractérisé en ce que
les parties prenantes délivrent en temps normal un signal d'état.

3. Bus de données selon la revendication 1 ou 2,
caractérisé en ce que
l'instant d'initialisation est déterminé par une impulsion d'initialisation émise de façon cyclique.

4. Bus de données selon la revendication 3,
caractérisé en ce que
l'impulsion d'initialisation suivante est délivrée de façon retardée, quand une partie prenante émet lors de l'écoulement de la durée du cycle.

5. Bus de données selon la revendication 4,
caractérisé en ce que
l'impulsion d'initialisation qui vient après la suivante est synchrone avec la première impulsion d'initialisation.

6. Bus de données selon l'une des revendications 3 à 5,
caractérisé en ce que
l'impulsion d'initialisation possède une longueur différente de celle de la situation normale dans le cas d'une situation d'alarme.

7. Bus de données selon l'une des revendications 1 à 6,
caractérisé en ce que
en situation normale ce sont des parties prenantes qui ne sont pas associées à des systèmes du véhicule critiques du point de vue de la sécurité, qui occupent le bus de données.
